# EUROPÄISCHE PATENTSCHRIFT

(11) **EP 1 515 830 B1**
(45) Veröffentlichungstag und Bekanntmachung des Hinweises auf die Patenterteilung: **11.11.2009**
(21) Anmeldenummer: 03740315.1
(22) Anmeldetag: 24.06.2003
(51) Int. Cl.: B29C 45/73, H05B 3/48

(54) **FLEXIBLER ELEKTRISCHER HEIZKÖRPER FÜR WERKZEUGE**
FLEXIBLE ELECTRICAL HEATING ELEMENT FOR TOOLS
ELEMENT DE CHAUFFAGE ELECTRIQUE SOUPLE POUR DES OUTILS

(30) Priorität: 27.06.2002 DE 10234432
(43) Veröffentlichungstag der Anmeldung: 23.03.2005
(73) Patentinhaber: GC-Heat Gebhard & Castiglia GmbH & Co. KG, 51545 Waldbröl (DE)
(72) Erfinder: CASTIGLIA, Ciacinto, 58509 Lüdenscheid (DE); CASTIGLIA, Francesco, 58509 Lüdenscheid (DE); GEBHARD, Martin, 51588 Nümbrecht (DE); SCHWAN, Hubert, 57537 Wissen (DE)
(74) Vertreter: Maxton Langmaack & Partner
(86) Internationale Anmeldenummer: PCT/EP2003/006608
(87) Internationale Veröffentlichungsnummer: WO 2004/002713

(56) Entgegenhaltungen:
- BE-A- 413 562
- DE-A- 2 533 935
- DE-A- 3 123 079
- DE-A- 3 145 876
- GB-A- 1 095 018
- US-A- 4 066 201

## Beschreibung

Die Erfindung betrifft einen flexiblen elektrischen Heizkörper zum Einbringen in eine Rille oder Nut von Werkzeugen, insbesondere Spritzgießwerkzeuge, wobei der Heizkörper wenigstens einen in einem Metallrohr angeordneten Heizleiter aufweist, wobei der Heizleiter in Isoliermasse eingebettet ist und der Heizkörper manuell biegbar ist.

Elektrische Heizkörper werden eingesetzt, um in nut- oder rinnenförmige Konturen einer Heizplatte eines Werkzeugs, unter anderem eines Spritzgießwerkzeuges, eingeformt zu werden, um dieses zu beheizen, wobei es notwendig ist, daß der Heizkörper entsprechend der Geometrie der Nut oder Rinne vorgeformt wird. Üblich ist es, daß ein Heizkörper maschinell entsprechend der Form der Rille oder Nut vorgebogen wird und in die vorgegebene Rille oder Nut eingelegt, eingepreßt oder eingekittet wird. Diese Heizkörper weisen den Nachteil auf, daß es sich um spezielle Einzelanfertigungen in Abhängigkeit von der Kontur der Nut handelt, die entsprechend kostenaufwendig in der Fertigung sind. Derartige dreidimensional vorgebogene Heizkörper sind nicht in eine Rinne oder Nut einlegbar- weiterhin hat sich herausgestellt, daß sich die verdichteten Heizkörper nach dem Stand der Technik bei größeren Außendurchmessern aufgrund der sich ergebenden größeren Rohrwandstärke nicht von Hand verformen lassen, insbesondere wenn der Biegeradius kleiner 10 mm sein soll.

Des weiteren ist aus dem Stand der Technik ein flexibler Rohrheizkörper gemäß der DE 42 42 505 C2 bekannt, der ein metallisches Mantelrohr aufweist, in welchem die Heizleiter in Isoliermasse eingebettet angeordnet sind, wobei das Mantelrohr durch einen flexiblen Ringwellschlauch gebildet ist.

Eine Weiterentwicklung dieses flexiblen Rohrheizkörpers ist aus der DE 195 41 504 A1 bekannt, wobei in einem metallischen Mantelrohr die Heizleiter in Isoliermasse eingebettet angeordnet sind und das Mantelrohr aus einem unter manueller Kraftaufwendung plastisch verformbarem Werkstoff besteht, wobei auf das Mantelrohr ein Ring- oder Wendelwellschlauch aufgeschoben ist und die zwischen dem Schlauch und dem Mantelrohr verbleibenden Hohlräume mit gut wärmeleitfähigem Metallpulver gefüllt sind.

Die flexiblen Heizkörper gemäß der DE 42 42 505 C2 und der DE 195 41 504 A1 haben sich dahingehend als nachteilig erwiesen, als daß der verwendete Ringwellschlauch teuer ist. Des weiteren muß der Außendurchmesser des Ringwellschlauches viel größer sein als der des innenliegenden metallischen Mantelrohres, da der Ringwellschlauch nur einen geringen freien inneren Querschnitt aufweist.

Ferner hat sich aus der DE 42 42 505 C2 ergeben, daß die Fertigung des flexiblen Rohrheizkörpers aufwendig ist, da die Isoliermasse in Pulverform in den Ringwellschlauch eingefüllt und durch Rütteln eingebracht und durch Reduzierung des Durchmessers verdichtet werden muß. Auch die Weiterentwicklung, die DE 195 41 504 A1 lehrt nur ein aufwendiges Berstellungsverfahren, da sowohl die Isoliermasse durch Rütteln eingebracht und durch Reduzierung des Durchmessers verdichtet werden muß als auch die zwischen dem Mantelrohr und dem Ringwellschlauch eingeführte Metallpulver.

Es hat sich außerdem herausgestellt, daß die bekannten flexiblen Heizkörper einen Außendurchmesser aufweisen müssen, der möglichst exakt der Nut oder Rille angepaßt ist, da sonst keine Wärmeübertragung von dem Heizkörper auf die Heizplatte erfolgt.

Aufgabe der Erfindung ist es, einen flexiblen elektrischen Heizkörper für Werkzeuge anzugeben, der die aus dem Stand der Technik bekannten Nachteile vermeidet und eine leichte und manuelle Biegbarkeit des Heizkörpers bei kostengünstiger Fertigung zu ermöglichen.

Die Aufgabe wird erfindungsgemäß gelöst durch einen flexiblen elektrischen Heizkörper zum Einbringen in eine Rille oder Nut von von werkzeugen, insbesondere Spritzgießwerkzeuge, wobei der Heizkörper wenigstens einen in einem Metallrohr angeordneten Heizleiter aufweist, wobei der Heizleiter in Isoliermasse eingebettet ist und der Heizkörper manuell biegbar ist, wobei das Metallrohr von wenigstens einem gasdurchlässigen metallischen Überzug umgeben ist, der als Drahtholgeflechtschlauch ausgebildet ist, wobei sich die Drähte des Drahthohlgeflechtsschlauches beim Einbringen des Heizkörpers in die Rille oder Nut der Form der Rille oder Nut anpassen. Unter einem Heizleiter im Sinne der Erfindung wird unter anderem eine Heizspirale oder ein Keramikkern mit einem auf dem Außenumfang aufgewickeltem Heizdraht verstanden. Unter einem flexiblen elektrischen Heizkörper im Sinne der Erfindung werden Heizkörper mit einseitigen (Heizpatronen) oder beidseitigem elektrischen Anschluß verstanden. Der Vorteil der erfindungsgemäß Gestaltung besteht darin, daß der metallische Überzug eine gute Wärmeübertragung von dem Metallrohr auf das Werkzeug gewährleistet. Es kann ein Metallrohr mit einem geringen Durchmesser und somit geringerem Widerstand gegen Biegung eingesetzt werden. Entgegen bisherigen Annahmen ist es nicht notwendig, einen gasdichten Ringwellschlauch vorzusehen, der aufwendig mit wärmeleitfähigem Pulver gefüllt wird. Der erfindungsgemäße Überzug hat die Eigenschaft, daß er einen guten Wärmetransport ermöglicht und der Überzug bis ungefähr 650° Celsius temperaturbeständig ist und somit nicht verzundert. Der Überzug ist so ausgelegt, daß beim Einpressen in die Nut in geringen Maßen eine Anpassung an die Geometrie der Nut erfolgt. Vorteilhaft ist es, wenn der Überzug spiralförmig ausgebildet ist, da hierdurch eine einfache Biegung auch um kleine Radien ermöglicht wird. Es ist weiterhin vorteilhaft, wenn der Überzug möglichst über seine gesamte Länge aufgepreßt wird, wodurch Lufteinschlüsse zwischen dem Mantelrohr und dem Überzug verringert werden, so daß ein guter Wärmeübergang möglich ist. Des weiteren wird durch das Anpressen des Überzugs in Abhängigkeit von dessen Ausbildung eine glatte Oberfläche des Überzuges erreicht, so daß dieser gut in der Nut anliegt.

In vorteilhafter Ausgestaltung ist vorgesehen, daß wenigstens ein Überzug als Drahtspirale ausgebildet ist. Eine derartige Gestaltung des Überzuges hat sich dahingehend als vorteilhaft erwiesen, daß eine Drahtspirale sich einfach einer Biegung anpaßt und einfach über das Metallrohr übergeschoben werden kann. Die Drahtspirale kann gegebenenfalls mit einer Steigung, d. h. einem Abstand zwischen den Drähten, eingesetzt werden. Drahtspiralen können als kostengünstiges Zukaufteil bezogen werden.

In weiterer vorteilhafter Ausgestaltung ist vorgesehen, daß wenigstens ein Überzug als Flachbandspirale oder Flachdrahtspirale ausgebildet ist. Flachbandspiralen und Flachdrahtspiralen weisen den Vorteil auf, daß aufgrund der konstruktionsbedingten bestehenden Überdeckung/Überlappung auch in einem Bogen die Wärme über den mechanischen Kontakt zwischen den Bändern/Drähten geleitet wird. Flachbandspiralen und Flachdrahtspiralen sind kostengünstige Zukaufteile, die als Meterware bezogen werden können.

In vorteilhafter Ausgestaltung ist vorgesehen, daß wenigstens ein Überzug als Litzenspirale ausgebildet ist. Litzenspiralen weisen gegenüber beispielsweise Drahtspiralen den Vorteil auf, daß sie noch flexibler sind, wodurch die Biegefähigkeit des flexiblen elektrischen Heizkörpers erhöht wird. Durch das Anpressen der Litzenspirale wird der anfänglich kreisrunde Querschnitt flacher, wodurch eine glatte Oberfläche erzielt wird und die Abstände zwischen den Einzeldrähten der Litzenspirale verringert werden, so daß ein guter Wärmeübergang auf das Werkzeug möglich ist.

Erfindungsgemäß ist vorgesehen, daß wenigstens ein Überzug als Drahthohlgeflechtschlauch ausgebildet ist. Ein Drahthohlgeflechtschlauch besteht aus einer Vielzahl von Einzeldrähten. Zweckmäßig ist es, wenn die eingesetzten Drähte des Geflechtes ungefähr einen Durchmesser von 0,2 bis 0,3 mm aufweisen und aus Nickel oder Edelstahl bestehen. Die Beweglichkeit des flexiblen Heizkörpers wird durch den Bedeckungsgrad (Dichte) des Drahthohlgeflechts beeinflußt. Dadurch, daß einzelne Drähte des Geflechts auch in Längsrichtung liegen, ist das Geflecht auch im Bogenbereich noch sehr dicht. Hierdurch kann auch im äußeren Bogenbereich noch eine gute Wärmeübertragung gewährleistet werden. Bei einer Biegung des Heizkörpers ist gewährleistet, daß der Überzug im Bogen nicht oval wird. Des weiteren wird auch der Drahthohlgeflechtschlauch ähnlich zu der Litzenspirale mit einer durch das Anpressen glatten Oberfläche versehen.

In vorteilhafter Ausgestaltung der Erfindung ist vorgesehen, daß ein erster metallischer Überzug von wenigstens einem weiteren metallischen Überzug umgeben ist. Die vorstehenden Arten der Überzüge können einlagig oder mehrlagig ausgeführt werden, wobei verschiedene Kombinationen möglich sind, beispielsweise der Einsatz einer Drahtspirale als erster Überzug und eines Drahthohlgeflechtschlauches als zweiter Überzug.

Vorteilhaft ist es, wenn die Überzüge auf dem verdichteten Mantelrohr fixiert werden, damit sie insbesondere beim Einbau nicht verrutschen. Hierbei ist eine Fixierung des Überzugs an den Enden des verdichteten Mantelrohres vorteilhaft und/oder ein Anpressen des Überzugs über wenigstens einen großen Teil seiner Länge, um eine glatte Oberfläche zu erzielen und isolierende Lufteinschlüsse zu verringern. Hierdurch wird ein besserer Wärmeübergang auf das Werkzeug erzielt. Das Anreduzieren bzw. Anpressen des Überzugs kann mit Hämmermaschinen oder Pressen erfolgen, wobei es zweckmäßig ist den Überzug um ungefähr 5 bis 15 % zu reduzieren.

Durch die Ausbildung eines Überzuges als Drahthohlgeflechtschlauch, der häufig als mechanischer Schutz von Leitungen/Schläuchen als Schutz von Kabeln vor elektromagnetischen Strahlen und zur Erhöhung der Druckbelastbarkeit von Schläuchen eingesetzt wird, ist gewährleistet, daß der flexible Heizkörper biegbar und widerstandsfähig gegen äußere Beschädigungen ist. Insbesondere passen sich die dünnen Drähte der Form der Rille oder Nut an, wodurch es auch möglich ist, einen im Prinzip runden flexiblen Heizkörper in eine rechteckige Rille oder Nut einzubringen und Toleranzen der Nut in geringen Maßen auszugleichen. Besonders vorteilhaft ist es, wenn der flexible Heizkörper einen rechteckigen Querschnitt aufweist, da die Nuten im Regelfall mit mittels Fräsen hergestellt werden und dementsprechend einen rechteckigen Querschnitt aufweisen. Ein flexibler Heizkörper mit einen rechteckigen Querschnitt paßt sich optimal an derartige rechteckige Nuten oder Rillen an, d.h. er liegt an den Nutflanken an, so daß ein optimaler wärmeübergang gegeben ist.

Das Verhältnis des Durchmessers des verdichteten Heizkörpers zu dem Außendurchmesser des flexiblen Heizkörpers kann leicht optimiert werden, um einerseits die Oberflächenbelastung des innenliegenden Heizleiters zu begrenzen und andererseits einen ausreichenden flexiblen Überzug aufzubringen, der sich der Rillen- bzw. der Nutform anpaßt. Vorteilhaft ist die erfindungsgemäße Ausgestaltung eines flexiblen Heizkörpers dahingehend, daß im Gegensatz zu den nach dem Stand der Technik bekannten flexiblen Heizkörpern bei den erfindungsgemäßen flexiblen Heizkörpern bei gleichem Außendurchmesser es möglich ist unter Verwendung eines dünnen Überzugs einen dicken verdichteten Heizkörper einzusetzen. Selbstverständlich kann auch unter Verwendung eines dicken Überzugs ein dünner verdichteter Heizkörper eingesetzt werden. Bei der erfindungsgemäßen Ausgestaltung kann ein verdichteter Heizkörper mit einem im Verhältnis größeren Außendurchmesser eingesetzt werden, der eine größere Lebensdauer aufweist als ein verdichteter Heizkörper mit einem im Verhältnis kleineren Außendurchmesser.

In vorteilhafter Ausgestaltung der Erfindung ist vorgesehen, daß das Mantelrohr und/oder der Überzug eine wärmeleitfähige Beschichtung aufweisen. Eine wärmeleitfähige Beschichtung kann auf den Überzug beispielsweise als wärmeleitende Paste oder Flüssigkeit aufgebracht werden, um die Temperaturdifferenz zwischen dem verdichteten Heizkörper und der Werkzeugnut zu verringern, da ein besserer Wärmeübergang erzielt wird. Durch den Einsatz einer Beschichtung wird der thermische Widerstand, der grundsätzlich zwischen zwei Metallen an der Kontaktfläche besteht, verringert. Bei dem erfindungsgemäß ausgestalteten flexiblen Heizkörper wird somit der Thermische Widerstand zwischen dem Mantelrohr und/oder dem Überzug und/oder der Werkzeugnut reduziert.

In weiterer vorteilhafter Ausgestaltung der Erfindung ist vorgesehen, daß die wärmeleitfähige Beschichtung zumindest teilweise aus Bornitrid besteht, insbesondere hexagonalem Bornitrid. Bornitrid weist eine sehr hohe thermische Leitfähigkeit auf und ist an der Luft bis ungefähr 1000° C beständig. Des weiteren weist eine Beschichtung aus Bornitrid gute Trenneigenschaften auf, wodurch der Ausbau der flexiblen Heizkörper aus der Werkzeugnut vereinfacht wird. Es ist zweckmäßig, wenn die Beschichtung des Überzugs nach dessen Verdichtung erfolgt, damit möglichst viel Material auf und/oder in dem Überzug haften bleibt.

Das Beschichtungsmittel Bornitrid kann beispielweise als Suspension, Spray oder Pulver eingesetzt werden. Zweckmäßig ist es, wenn feuerfeste Binder dem Bornitrid zugesetzt werden, um eine gute Haftung bei hohen Temperaturen auf dem Mantelrohr und/oder Überzug zu erzielen. Beschichtungen aus hexaponalem Bornitrid besitzen eine gute Wärmeleitfähigkeit und sind elektrisch isolierend.

Die Erfindung wird anhand schematischer Zeichnungen eines Ausführungsbeispiels näher erläutert. Es zeigen:
- Fig. 1: Eine Seitenansicht eines erfindungsgemäßen flexiblen Heizkörpers, teilweise geschnitten,
- Fig. 2: eine Flachbandspirale,
- Fig. 3: eine Litzenspirale und
- Fig. 4: eine Heizplatte mit einem eingepaßtem flexiblen Heizkörper.

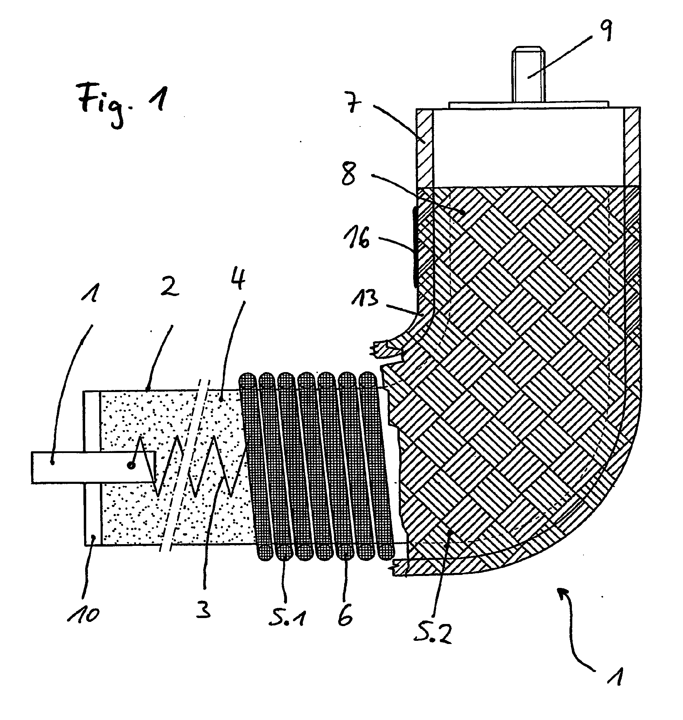

Fig. 1 zeigt eine teilweise geschnittene Seitenansicht des erfindungsgemäßen flexiblen Heizkörpers 1. Der Heizkörper 1 weist ein Metallrohr 2, in welchem ein Heizleiter 3 in ISOliermasse 4 eingebettet angeordnet ist. Die Isoliermasse 4 besteht aus einem elektrisch isolierenden gut wärmeleitfähigen Werkstoff. vorteilhaft ist es , wenn das Metallrohr 2 aus Nickel, vorzugsweise mit einer Reinheit von 99,2 %, gebildet ist, damit das Metallrohr 2 leicht gebogen werden kann. Insbesondere ist es wünschenswert, daß eine manuelle Biegung des Metallrohrs 2 möglich ist. Als Isoliermasse 4 kann beispielsweise MgO oder ein anderes isolierendes pulverförmiges Material eingesetzt werden, wobei es üblich ist, daß nach dem Einziehen des Heizleiters 3 in das Metallrohr 2 Isoliermasse 4 in das Metallrohr 2 gefüllt wird und anschließend dieses durch Rütteln und Reduzieren des Metallrohres 2 verdichtet wird, um einen guten Wärmeübergang zu erzielen. Auf das Metallrohr 2 wird ein erster gasdurchlässiger Überzug 5.1 in Form einer Drahtspirale 6 aufgeschoben und mittels einer Fixierung 7 festgelegt. Als Material für den Überzug 5.1, 5.2 können beispielsweise Nickel, Edelstahl oder Kupferlegierungen eingesetzt werden. Als zusätzlicher Schutz vor mechanischen Beschädigungen und zur bessern Anpassung an die Nutform ist über die Drahtspirale 6 eine zweiter Überzug 5.2 in Form eines Drahthohlgeflechtes 8 aufgeschoben. Der Heizleiter 3 ist mit einem Anschlußbolzen 9 verbunden der durch ein Abschlußelement 10 durchgeführt ist, welches das Metallrohr 2 verschließt. Vorteilhaft ist es, wenn das Mantelrohr und/oder der Überzug 5.1, 5.2 mit einer wärmeleitfähigen Beschichtung 16 versehen sind, die den thermischen Widerstand an den Kontaktflächen vermindert und Zwischenräume zwischen den einzelnen Drähten 13 eines Drahthohlgefechtschlauchs 8 oder einer Litzenspirale 12 ausfüllt. Die Beschichtung 16 ist nur partiell dargestellt, wobei es möglich ist, beispielsweise durch Tränkung mit einem Beschichtungsmittel, eine Beschichtung 16 zwischen den einzelnen Drähten 13 des Drahthohlgeflechtschlauchs 8 und/oder dessen Außenumfang und/oder zwischen dem Mantelrohr 2, der Drahtspirale 6 und dem Drahthohlgeflechtschlauch 8 vorzusehen. Die Beschichtung kann auch als Spray aufgebracht werden.

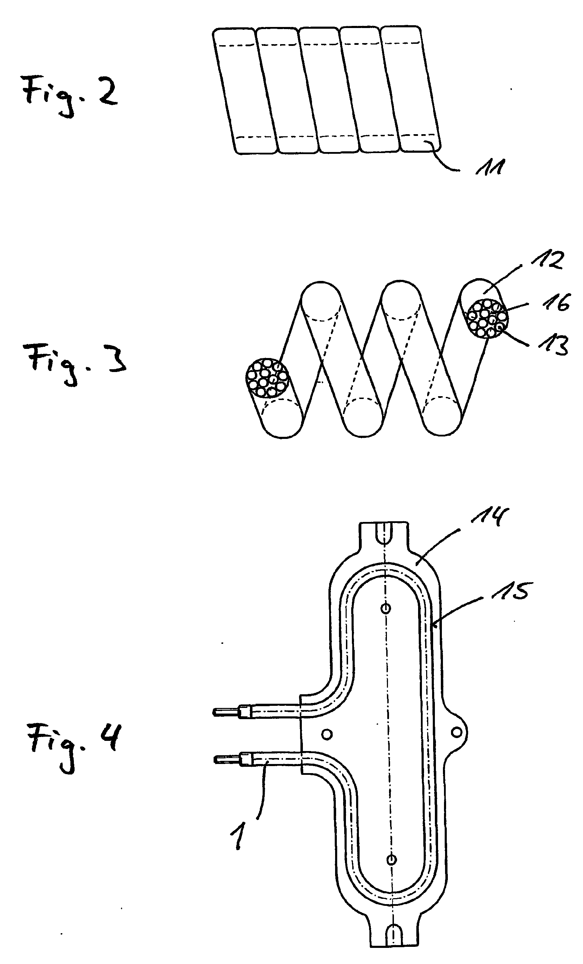

Fig. 2 zeigt eine Ausgestaltung des Überzugs 5.1 in Form einer Flachbandspirale 11, wobei die ebenfalls erfindungsgemäße Flachdrahtspirale ähnlich aufgebaut ist. Eine Flachbandspirale weist im Gegensatz zu einer Flachdrahtspiral Kanten auf. Vorteilhaft ist, daß durch die Überdeckung/Überlappung auch in einem Bogen die Wärme über den mechanischen Kontakt zwischen den Bändern/Drähten geleitet wird.

Fig. 3 zeigt eine Ausgestaltung des Überzugs 5.1 in Form einer Litzenspirale 12, die aus einer Vielzahl von dünnen Drähten 13 gebildet wird, wobei die Litzenspirale 12 durch Tränkung mit einem Beschichtungsmittel eine Beschichtung 16 zwischen den einzelnen Drähten 13 und/oder auf dem Umfang der Litzenspirale 12 aufweisen kann.

Fig. 4 zeigt eine Heizplatte 14 die Nuten 15 zur Aufnahme des flexiblen elektrischen Heizkörpers 1 aufweist in die der Heizkörper 1 eingepaßt wird.

## Patentansprüche

1. Flexibler elektrischer Heizkörper (1) zum Einbringen in eine Rille oder Nut von Werkzeugen, insbesondere Spritzgießwerkzeuge, wobei der Heizkörper (1) wenigstens einen in einem Metallrohr (2) angeordneten Heizleiter (3) aufweist, wobei der Heizleiter (3) in Isoliermasse (4) eingebettet ist und der Heizkörper (1) manuell biegbar ist, **dadurch gekennzeichnet, dass** das Metallrohr (2) von wenigstens einem gasdurchlässigen metallischen Überzug (5) umgeben ist, der als Drahthohlgeflechtschlauch ausgebildet ist, wobei sich die Drähte des Drahthohlgeflechtschlauches (8) beim Einbringen des Heizkörpers (1) in die Rille oder Nut der Form der Rille oder Nut anpassen.

2. Flexibler elektrischer Heizkörper (1) nach Anspruch 1, **dadurch gekennzeichnet, dass** der Überzug bis ungefähr 650° Celsius temperaturbeständig ist

3. Flexibler elektrischer Heizkörper (1) nach Anspruch 1 oder 2, **dadurch gekennzeichnet, daß** ein erster metallischer Überzug (5.1) von wenigstens einem weiteren metallischen Überzug (5.2) umgeben ist.

4. Flexibler elektrischer Heizkörper (1) nach einem der Ansprüche 1 bis 3, **dadurch gekennzeichnet, daß** die Drähte des Drahthohlgeflechtschlauch aus Nickel bestehen.

5. Flexibler elektrischer Heizkörper (1) nach einem der Ansprüche 1 bis 4, **dadurch gekennzeichnet, daß** die Drähte des Drahthohlqeflechtschlaueh einen Durchmesser von 0,2 bis 0,3 mm aufweisen.

6. Flexibler elektrischer Heizkörper (1) nach einem der Ansprüche 1 bis 5, **dadurch gekennzeichnet, daß** das Metallrohr (2) und/oder wenigstens ein Überzug (5.1; 5.2) eine wärmeleitfähige Beschichtung (16) aufweisen.

7. Flexibler elektrischer Heizkörper (1) nach Anspruch 6, **dadurch gekennzeichnet, daß** die wärmeleitfähige Beschichtung (16) zwischen den einzelnen Drähten (13) eines Drahthohlgeflechtsschlauchs (8) angeordnet ist.

8. Flexibler elektrischer Heizkörper (1) nach einem der Ansprüche 1 bis 7, **dadurch gekennzeichnet, daß** die wärmeleitfähige Beschichtung (16) zumindest teilweise aus Bornitrid besteht, insbesondere hexagonalem Bornitrid.

9. Flexibler elektrischer Heizkörper (1) nach einem der Ansprüche 1 bis 8, **dadurch gekennzeichnet, daß** der flexible elektrische Heizkörper (1) einen rechteckigen Querschnitt aufweist.

10. Verwendung eines flexiblen elektrischen Heizkörpers (1) nach einem der Ansprüche 1 bis 9 für die Heizplatte eines Spritzgießwerkzeuges, insbesondere eines Heißkanalwerkzeuges.

## Claims

1. A flexible electrical heating element (1) for insertion into a channel or groove in tools, in particular injection-moulding tools, wherein the heating element (1) has at least one heating conductor (3) arranged in a metal tube (2), wherein the heating conductor (3) is embedded in insulation material (4) and the heating element (1) is capable of being bent manually, **characterized in that** the metal tube (2) is surrounded by at least one gas-permeable metal covering (5) which is constructed in the form of a braided metal sleeve, wherein the wires of the braided metal sleeve (8) adapt themselves to the shape of the channel or groove when the heating element (1) is inserted into the channel or groove.

2. A flexible electrical heating element (1) according to Claim 1, **characterized in that** the covering is temperature-resistant up to approximately 650°C.

3. A flexible electrical heating element (1) according to Claim 1 or 2, **characterized in that** a first metal covering (5.1) is surrounded by at least one further metal covering (5.2).

4. A flexible electrical heating element (1) according to any one of Claims 1 to 3, **characterized in that** the wires of the braided metal sleeve consist of nickel.

5. A flexible electrical heating element (1) according to any one of Claims 1 to 4, **characterized in that** the wires of the braided metal sleeve have a diameter of from 0.2 to 0-3 mm.

6. A flexible electrical heating element (1) according to any one of Claims 1 to 5, **characterized in that** the metal tube (2) and/or at least one covering (5.1; 5.2) has or have a thermally conductive coating (16).

7. A flexible electrical heating element (1) according to Claim 6, **characterized in that** the thermally conductive coating (16) is arranged between the individual wires (13) of a braided metal sleeve (8).

8. A flexible electrical heating element (1) according to any one of Claims 1 to 7, **characterized in that** the thermally conductive coating (16) consists at least in part of boron nitride, in particular hexagonal boron nitride.

9. A flexible electrical heating element (1) according to any one of Claims 1 to 8, **characterized in that** the flexible electrical heating element (1) has a rectangular cross-section.

10. Use of a flexible electrical heating element (1) according to any one of Claims 1 to 9 for the heating plate of an injection-moulding tool, in particular a hot runner mould.

## Revendications

1. Elément de chauffage électrique flexible (1) à installer dans une rainure ou une gorge d'outils, notamment des outils de moulage par injection, le corps chauffant (1) présentant au moins un conducteur chauffant (3) disposé dans un tube métallique (2), le conducteur chauffant (3) étant noyé dans une masse isolante (4) et l'élément chauffant (1) pouvant être courbé manuellement, **caractérisé en ce que** le tube métallique (2) est entouré d'au moins un revêtement métallique perméable aux gaz (5) qui est constitué par un manchon métallique tressé, les fils du manchon métallique tressé (8) s'adaptant à la forme de la rainure ou de la gorge lors de l'installation de l'élément de chauffage (1) dans la rainure ou la gorge.

2. Elément de chauffage électrique flexible (1) selon la revendication 1, **caractérisé en ce que** le revêtement résiste à une température pouvant atteindre 650°C.

3. Elément de chauffage électrique flexible (1) selon la revendication 1 ou 2, **caractérisé en ce qu'**un premier revêtement métallique (5.1) est entouré d'au moins un revêtement métallique supplémentaire (5.2).

4. Elément de chauffage électrique flexible (1) selon l'une des revendications 1 à 3, **caractérisé en ce que** les fils du manchon métallique tressé sont en nickel.

5. Elément de chauffage électrique flexible (1) selon l'une des revendications 1 à 4, **caractérisé en ce que** les fils du manchon métallique tressé présentent un diamètre de 0,2 à 0,3 mm.

6. Elément de chauffage électrique flexible (1) selon l'une des revendications 1 à 5, **caractérisé en ce que** le tube métallique (2) et/ou au moins un revêtement (5.1 ; 5.2) présentent une enduction conductrice de la chaleur (16).

7. Elément de chauffage électrique flexible (1) selon l'une des revendications 1 à 6, **caractérisé en ce que** l'enduction conductrice de la chaleur (16) est disposée entre les fils individuels (13) d'un manchon métallique tressé (8).

8. Elément de chauffage électrique flexible (1) selon l'une des revendications 1 à 7, **caractérisé en ce que** l'enduction conductrice de la chaleur (16) est constituée au moins en partie de nitrure de bore, notamment du nitrure de bore hexagonal.

9. Elément de chauffage électrique flexible (1) selon l'une des revendications 1 à 8, **caractérisé en ce que** l'élément de chauffage électrique flexible (1)présente une section droite rectangulaire.

10. Utilisation d'un élément de chauffage (1) selon l'une des revendications 1 à 9 pour la plaque de chauffage d'un outil de moulage par injection, notamment un moule à canaux chauffants.
